# EUROPEAN PATENT APPLICATION

(11) **EP 4 757 367 A1**
(43) Date of publication of application: **10.06.2026**
(21) Application number: 25198338.3
(22) Date of filing: 27.08.2025
(51) Int. Cl.: H04W 12/03, H04W 4/06, H04W 4/40, H04W 4/80, H04W 12/50

(54) **METHOD AND DEVICE FOR TRANSMITTING INSTRUCTION, STORAGE MEDIUM, AND PROGRAM PRODUCT**

(30) Priority: 04.12.2024 CN 202411775485
(71) Applicant: Xiaomi EV Technology Co., Ltd., Beijing 100176 (CN)
(72) Inventor: LIN, Yizhen, Beijing, 100176 (CN)
(74) Representative: Stöckeler, Ferdinand

(57) **Abstract**

A method and device for transmitting an instruction, a storage medium, and a program product are provided, which belong to the field of intelligent connected technology. The method includes: determining (S11) a target instruction for a receiver; and sending (S12), in a case where no Bluetooth connection to the receiver is established, the target instruction to the receiver through a Bluetooth broadcast.

## Description

### TECHNICAL FIELD

The present invention relates to the field of intelligent connected technology, and in particular to a method and device for transmitting an instruction, a storage medium, and a program product.

### BACKGROUND OF THE INVENTION

In a vehicle usage scenario, control instructions can be sent to a vehicle through a vehicle key. For example, the vehicle key can establish Bluetooth connection to the vehicle, and send relevant control instructions to the vehicle through the established Bluetooth connection.

### SUMMARY OF THE INVENTION

In order to overcome problems in the related art, the present invention provides a method and device for transmitting an instruction, a storage medium, and a program product. The invention is set out in the appended set of claims.

In a first aspect, a method for transmitting an instruction is provided in embodiments of the present invention. The method includes:
determining a target instruction for a receiver; and
sending, in a case where no Bluetooth connection to the receiver is established, the target instruction to the receiver through a Bluetooth broadcast.

Optionally, sending the target instruction to the receiver through the Bluetooth broadcast includes:
obtaining an encrypted instruction by encrypting the target instruction, where the encrypted instruction includes at least one broadcast frame, where the broadcast frame includes a first identifier, and the first identifier is configured for the receiver to obtain the encrypted instruction by associating the at least one broadcast frame; and
sending the at least one broadcast frame to the receiver through the Bluetooth broadcast.

Optionally, obtaining the encrypted instruction by encrypting the target instruction includes:
obtaining a first key by determining a key used when a Bluetooth connection to the receiver is established last time; and
obtaining the encrypted instruction by encrypting the target instruction with the first key.

Optionally, a plurality of keys are preset in a sender and the receiver; the obtaining the encrypted instruction by encrypting the target instruction includes:
obtaining a second key by determining a key from a plurality of preset keys;
obtaining an encrypted result by encrypting the target instruction with the second key; and
generating the encrypted instruction according to the encrypted result and a second identifier of the second key, where one or more broadcast frames in the encrypted instruction include the second identifier, and the second identifier is configured for the receiver to determine the second key used by the encrypted instruction from the plurality of keys.

Optionally, obtaining the second key by determining the key from the plurality of preset keys includes:
obtaining a first rolling code by determining a current rolling code; and
determining the second key according to the first rolling code and an association relationship between a rolling code and the plurality of keys;
where the second identifier includes the first rolling code.

Optionally, sending the at least one broadcast frame to the receiver through the Bluetooth broadcast includes:
broadcasting a currently selected broadcast frame at least once; and
selecting a new broadcast frame from a broadcast frame that has not been sent among the at least one broadcast frame.

Optionally, sending, in a case where no Bluetooth connection to the receiver is established, the target instruction to the receiver through the Bluetooth broadcast includes:
sending, in a case where the Bluetooth connection to the receiver fails, the target instruction to the receiver through the Bluetooth broadcast; or
stopping establishing, in a case where a number of Bluetooth devices connected to the receiver reaches a number threshold, the Bluetooth connection to the receiver, and sending the target instruction to the receiver through the Bluetooth broadcast; or
stopping establishing, in a case where the Bluetooth connection to the receiver fails and the number of the Bluetooth devices connected to the receiver reaches the number threshold, the Bluetooth connection to the receiver, and sending the target instruction to the receiver through the Bluetooth broadcast.

In a second aspect, a method for transmitting an instruction is provided in the embodiments of the present invention. The method includes:
receiving a target instruction sent by a sender through the Bluetooth broadcast;
where the sender sends the target instruction through the Bluetooth broadcast, in a case where no Bluetooth connection to the sender is established.

Optionally, receiving the target instruction sent by the sender through the Bluetooth broadcast includes:
receiving at least one broadcast frame sent by the sender through the Bluetooth broadcast, where the at least one broadcast frame is obtained by encrypting, by the sender, the target instruction, and the broadcast frame includes a first identifier;
obtaining an encrypted instruction by associating the at least one broadcast frame according to the first identifier in the broadcast frame; and
obtaining the target instruction by decrypting the encrypted instruction.

Optionally, the encrypted instruction is obtained by encrypting with a first key, and the first key is a key determined by the sender and used when a Bluetooth connection to the receiver is established last time; and decrypting the encrypted instruction includes:
determining a key used when the Bluetooth connection to the sender is established last time; and
decrypting the encrypted instruction with the determined key.

Optionally, a plurality of keys are preset in the sender, and the encrypted instruction is obtained by encrypting with a second key from the plurality of keys; where the at least one broadcast frame is generated by the sender according to an encrypted result of the second key and a second identifier of the second key, and one or more broadcast frames include the second identifier; where obtaining the encrypted instruction by associating the at least one broadcast frame according to the first identifier in the broadcast frame includes:
obtaining the encrypted instruction and the second identifier by associating the at least one broadcast frame according to the first identifier in the broadcast frame; and
where decrypting the encrypted instruction includes:
   determining the second key used by the encrypted instruction from the plurality of preset keys according to the second identifier; and
   decrypting the encrypted instruction with the second key.

Optionally, the second identifier includes a first rolling code; where determining the second key used by the encrypted instruction from the plurality of preset keys according to the second identifier includes:
determining the second key according to the first rolling code and an association relationship between a rolling code and the plurality of keys; and
where decrypting the encrypted instruction with the second key includes:
   obtaining a second rolling code by determining a rolling code used by the sender for sending an instruction last time; and
   decrypting, in a case where the first rolling code is greater than the second rolling code, the encrypted instruction with the second key.

In a third aspect, a device for transmitting an instruction is provided in the embodiments of the present invention. The device for transmitting an instruction includes:
a first module, configured to determine a target instruction for a receiver; and
a second module, configured to send, in a case where no Bluetooth connection to the receiver is established, the target instruction to the receiver through a Bluetooth broadcast.

Optionally, the second module includes:
a first sub-module, configured to obtain an encrypted instruction by encrypting the target instruction, where the encrypted instruction includes at least one broadcast frame, where the broadcast frame includes a first identifier, and the first identifier is configured for the receiver to obtain the encrypted instruction by associating the at least one broadcast frame; and
a second sub-module, configured to send the at least one broadcast frame to the receiver through the Bluetooth broadcast.

Optionally, the first sub-module includes:
a first sub-unit, configured to obtain a first key by determining a key used when a Bluetooth connection to the receiver is established last time; and
a second sub-unit, configured to obtain the encrypted instruction by encrypting the target instruction with the first key.

Optionally, the first sub-module includes:
a third sub-unit, configured to obtain a second key by determining a key from a plurality of preset keys;
a fourth sub-unit, configured to obtain an encrypted result by encrypting the target instruction with the second key; and
a fifth sub-unit, configured to generate the encrypted instruction according to the encrypted result and a second identifier of the second key, where one or more broadcast frames in the encrypted instruction include the second identifier, and the second identifier is configured for the receiver to determine the second key used by the encrypted instruction from the plurality of keys.

Optionally, the third sub-unit is configured to:
obtain a first rolling code by determining a current rolling code; and
determine the second key according to the first rolling code and an association relationship between a rolling code and the plurality of keys;
where the second identifier includes the first rolling code.

Optionally, the second sub-module further includes:
a sixth sub-unit, configured to broadcast a currently selected broadcast frame at least once;
   and
a seventh sub-unit, configured to select a new broadcast frame from a broadcast frame that has not been sent among the at least one broadcast frame.

Optionally, the second module includes:
a fourth sub-module, configured to send, in a case where the Bluetooth connection to the receiver fails, the target instruction to the receiver through the Bluetooth broadcast; or
a fifth sub-module, configured to stop establishing, in a case where a number of Bluetooth devices connected to the receiver reaches a number threshold, the Bluetooth connection to the receiver, and send the target instruction to the receiver through the Bluetooth broadcast; or
a sixth sub-module, configured to stop establishing, in a case where the Bluetooth connection to the receiver fails and the number of the Bluetooth devices connected to the receiver reaches the number threshold, the Bluetooth connection to the receiver, and send the target instruction to the receiver through the Bluetooth broadcast.

In a fourth aspect, a device for transmitting an instruction is provided in the embodiments of the present invention. The device for transmitting an instruction is applied to a receiver and includes:
a third module, configured to receive a target instruction sent by a sender through a Bluetooth broadcast;
where the sender sends the target instruction through the Bluetooth broadcast, in a case where no Bluetooth connection to the sender is established.

Optionally, the third module includes:
a seventh sub-module, configured to receive at least one broadcast frame sent by the sender through the Bluetooth broadcast, where the at least one broadcast frame is obtained by encrypting, by the sender, the target instruction, and the broadcast frame includes a first identifier;
an eighth sub-module, configured to obtain an encrypted instruction by associating the at least one broadcast frame according to the first identifier in the broadcast frame; and
a ninth sub-module, configured to obtain the target instruction by decrypting the encrypted instruction.

Optionally, the encrypted instruction is obtained by encrypting with a first key, and the first key is a key determined by the sender and used when a Bluetooth connection to the receiver is established last time; and the ninth sub-module includes:
a first processing unit, configured to determine a key used when the Bluetooth connection to the sender is established last time; and
a second processing unit, configured to decrypt the encrypted instruction with the determined key.

Optionally, a plurality of keys are preset in the sender, and the encrypted instruction is obtained by encrypting with a second key from the plurality of keys; where the at least one broadcast frame is generated by the sender according to an encrypted result of the second key and a second identifier of the second key, and one or more broadcast frames include the second identifier; where the eighth sub-module includes:
a third processing unit, configured to obtain the encrypted instruction and the second identifier by associating the at least one broadcast frame according to the first identifier in the broadcast frame; and
where the ninth sub-module includes:
   a fourth processing unit, configured to determine the second key used by the encrypted instruction from the plurality of preset keys according to the second identifier; and
   a fifth processing unit, configured to decrypt the encrypted instruction with the second key.

Optionally, the second identifier includes a first rolling code; and the fourth processing unit is configured to:
determine the second key according to the first rolling code and an association relationship between a rolling code and the plurality of keys; and
where the fifth processing unit is configured to:
   obtain a second rolling code by determining a rolling code used by the sender for transmitting an instruction last time; and
   decrypt, in a case where the first rolling code is greater than the second rolling code, the encrypted instruction with the second key.

In a fifth aspect, a non-transitory computer-readable storage medium is provided in the embodiments of the present invention. The computer-readable storage medium stores a computer program, where the computer program, when executed by a processor, implements steps of the method in the first aspect or the second aspect.

In a sixth aspect, a computer program product is provided in the embodiments of the present invention. The computer program product includes a computer program, where the computer program, when executed by a processor, implements steps of the method in the first aspect or the second aspect.

In the above solution, the sender may determine the target instruction for the receiver, and send, in a case where no Bluetooth connection to the receiver is established, the target instruction to the receiver through the Bluetooth broadcast. Thus, during the instruction transmission, the sender may transmit the instruction to the receiver through the Bluetooth broadcast, without establishing the Bluetooth connection to the receiver. In this way, in scenarios where Bluetooth connection fails, the instruction can also be transmitted through the above solution. Thus, a success rate of the instruction transmission can be ensured.

It should be understood that the above general description and the following detailed description are merely illustrative and explanatory, and cannot limit the present invention.

### BRIEF DESCRIPTION OF DRAWINGS

The accompanying drawings here are incorporated in the description as a constituent part of the description, illustrate embodiments conforming to the present invention, and serve to explain the principles of the present invention along with the description.
FIG. 1 is a flowchart of a method for transmitting an instruction shown according to an example;
FIG. 2 is a flowchart of implementation of S12 shown according to an example;
FIG. 3 is a flowchart of communication between a vehicle key and a vehicle shown according to an example;
FIG. 4 is a flowchart of data processing shown according to an example;
FIG. 5 is a flowchart of a method for transmitting an instruction shown according to an example;
FIG. 6 is a flowchart of implementation of S51 shown according to an example;
FIG. 7 is a block diagram of a device for transmitting an instruction shown according to an example;
FIG. 8 is a block diagram of a device for transmitting an instruction shown according to an example;
FIG. 9 is a block diagram of a vehicle shown according to an example; and
FIG. 10 is a block diagram of a device for transmitting an instruction shown according to an example.

### DETAILED DESCRIPTION OF THE INVENTION

Examples will be described in detail here, and illustratively shown in the accompanying drawings. When the following description relates to the accompanying drawings, the same numbers in different accompanying drawings denote the same or similar elements, unless indicated otherwise. Implementations described in the following examples do not denote all implementations consistent with the present invention. On the contrary, the implementations are merely instances of devices and methods consistent with some aspects of the present invention as recited in the appended claims.

Before a method and device for transmitting an instruction, a storage medium, and a program product of the present invention are introduced, relevant scenarios in embodiments of the present invention are first introduced.

In a vehicle usage scenario, control instructions can be sent to a vehicle through a vehicle key. For example, the vehicle key can establish Bluetooth connection to the vehicle, and send relevant control instructions to the vehicle through the established Bluetooth connection. However, in some scenarios, it may be difficult for the vehicle key to send the control instructions to the vehicle, resulting in reduction in user experience.

Generally, the vehicle can be provided with a plurality of Bluetooth keys, such as a mobile phone Bluetooth key and a remote control Bluetooth key. In addition, a user can share the mobile phone Bluetooth key with others, so as to generate the plurality of Bluetooth keys. It should be noted that the stability of connection of the Bluetooth key may be decreased after the vehicle is connected to too many Bluetooth devices. Thus, an upper limit of connection of the Bluetooth keys is generally set in the vehicle. When a number of the Bluetooth keys connected reaches the upper limit, the vehicle may reject Bluetooth connection to other Bluetooth keys. In this way, since the Bluetooth key cannot be connected to the vehicle, the user cannot transmit instructions to the vehicle through the Bluetooth key. In this case, the user cannot control the vehicle through the Bluetooth key.

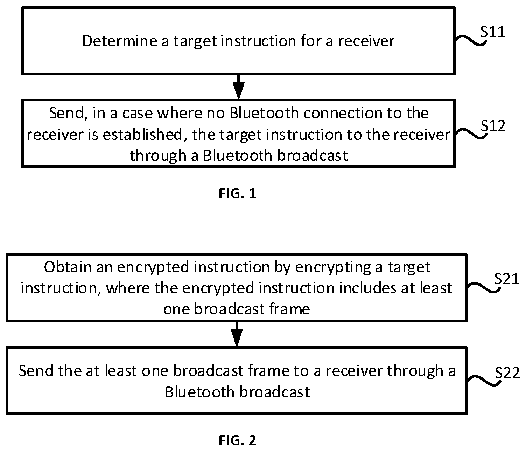

Thus, a method for transmitting an instruction is provided in the embodiments of the present invention. The method may be performed by a sender, for example. The sender may be various devices, such as a mobile phone, a tablet device, and a wearable device. In a vehicle application scenario, the sender may be the vehicle key. FIG. 1 is a flowchart of a method for transmitting an instruction shown according to an example of the present invention. With reference to FIG. 1, the method includes S11-S12.

S11, determining a target instruction for a receiver.

With the sender being the vehicle key as an example, in some scenarios, the vehicle key may respond to a key operation by a user, so as to determine an instruction corresponding to the key operation, and obtain the target instruction. The target instruction may be, for example, an instruction for opening a vehicle door and an instruction for activating an in-vehicle air conditioner.

S12, sending, in a case where no Bluetooth connection to the receiver is established, the target instruction to the receiver through a Bluetooth broadcast.

In a possible implementation, in a case where the Bluetooth connection to the receiver fails, the target instruction may be sent to the receiver through the Bluetooth broadcast. With the vehicle key as an example, the vehicle key may attempt to establish the Bluetooth connection to the vehicle, and send, in a case where the connection fails, the target instruction to the vehicle through the Bluetooth broadcast.

In a possible implementation, in a case where a number of the Bluetooth devices connected to the receiver reaches a number threshold, establishing the Bluetooth connection to the receiver is stopped, and the target instruction is sent to the receiver through the Bluetooth broadcast.

In the above example, the vehicle key may be, for example, connected to a mobile phone of a vehicle owner. When the number of the Bluetooth devices connected to the vehicle reaches the number threshold, the vehicle may send prompt information indicating that the number of the Bluetooth devices reaches the number threshold to the mobile phone of the vehicle owner. In this way, the vehicle key may learn that the number of the Bluetooth devices connected to the vehicle reaches the number threshold through the mobile phone of the vehicle owner, and stop establishing the Bluetooth connection to the vehicle. In this way, the stability of connection between the vehicle and the Bluetooth device connected can be ensured. In addition, the vehicle key may implement instruction transmission by sending the target instruction to the vehicle through the Bluetooth broadcast.

In a possible implementation, the two above solutions may alternatively be used in combination. For example, in a case where the Bluetooth connection to the receiver fails and the number of the Bluetooth devices connected to the receiver reaches the number threshold, establishing the Bluetooth connection to the receiver may be stopped, and the target instruction may be sent to the receiver through the Bluetooth broadcast.

Illustratively, the vehicle key may attempt to establish the Bluetooth connection to the vehicle. In a case where the Bluetooth connection fails, the vehicle key may further determine whether the number of the Bluetooth devices connected to the receiver reaches the number threshold. In a case where the number reaches the number threshold, the vehicle key may stop establishing the Bluetooth connection to the receiver, and send the target instruction to the receiver through the Bluetooth broadcast. If in a case where the number of the Bluetooth devices does not reach the number threshold, the failure of the Bluetooth connection may be accidental. Thus, the vehicle key may attempt to re-establish Bluetooth connection to the vehicle.

An implementation in which the sender sends the target instruction to the receiver through the Bluetooth broadcast is illustratively described below.

FIG. 2 is a flowchart of an implementation of S12 shown according to an example of the present invention. With reference to FIG. 2, the step of sending the target instruction to the receiver through the Bluetooth broadcast includes S21-S22.

S21, obtaining an encrypted instruction by encrypting the target instruction, where the encrypted instruction includes at least one broadcast frame.

Each of the at least one broadcast frame may include a first identifier, and the first identifier is configured for the receiver to obtain the encrypted instruction by associating the at least one broadcast frame.

In an implementation, an encrypted result may be obtained by encrypting the target instruction. In this way, one or more broadcast frames may be generated according to the encrypted result, and the encrypted instruction may be generated according to the one or more broadcast frames.

In an implementation, one or more segmentation results may be obtained by segmenting the target instruction. In this way, one or more broadcast frames are correspondingly obtained by encrypting each segmentation result, and the encrypted instruction is generated according to the one or more broadcast frames.

In addition, the broadcast frame may include a first identifier, and the first identifier is configured for the receiver to obtain the encrypted instruction by associating the one or more broadcast frames.

In a possible implementation, the step of obtaining the encrypted instruction by encrypting the target instruction includes:
obtaining a first key by determining a key used when a Bluetooth connection to the receiver is established last time; and
obtaining the encrypted instruction by encrypting the target instruction with the first key.

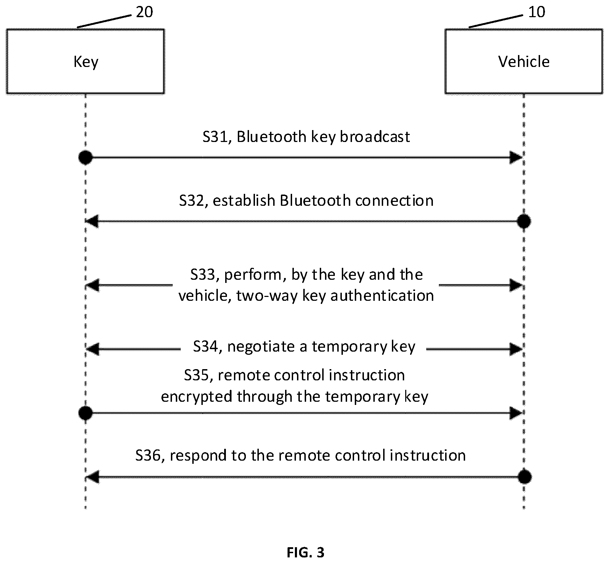

FIG. 3 is a flowchart of communication between a vehicle key and a vehicle shown according to an example of the present invention. In the figure, the vehicle 10 may be used as the receiver. With reference to FIG. 3, in S31, the key may send a connectable Bluetooth key broadcast. In S32, the vehicle 10 may establish the Bluetooth connection to the vehicle key 20 by performing Bluetooth scanning. In S33, the vehicle 10 may also read a unique code of the key 20, perform two-way key authentication with a key mutually trusted by the vehicle 10 and the key 20. In S34, the vehicle 10 and the key 20 may negotiate a temporary key configured for subsequent communication. In S35, when a key button is triggered, a remote control instruction may be encrypted with the temporary key, so as to be prevented from being cracked by brute force. In S36, after receiving the encrypted instruction, the vehicle 10 may obtain the plaintext of the remote control instruction by decrypting the encrypted instruction through the temporary key, and respond to the remote control instruction.

To be specific, when the Bluetooth connection is established between the vehicle key and the vehicle, the temporary key may be negotiated between the vehicle key and the vehicle, and saved in the vehicle key and the vehicle. Thus, when the target instruction is sent through the broadcast, the vehicle key may obtain a first key by determining the key negotiated for use when the Bluetooth connection to the vehicle is established last time. In this way, the encrypted instruction may be obtained by encrypting the target instruction with the first key.

It should be noted that after the vehicle key is re-connected to the vehicle, a new temporary key may be negotiated and saved. Thus, the effect of automatically updating the first key can be achieved. In this way, the first keys used in a plurality of encryption processes may be different, so that the security of instruction transmission is ensured.

In addition, considering that a standard length of the Bluetooth broadcast in the relevant scenario is 37 bytes, it may be impossible to send a complete encrypted instruction. Thus, a plurality of broadcast frames may be generated by segmenting the encrypted instruction. In addition, in order to identify the plurality of broadcast frames, a first identifier may be set in each broadcast frame. After receiving the broadcast frame, the receiver may obtain the encrypted instruction by associating the plurality of broadcast frames according to the first identifier.

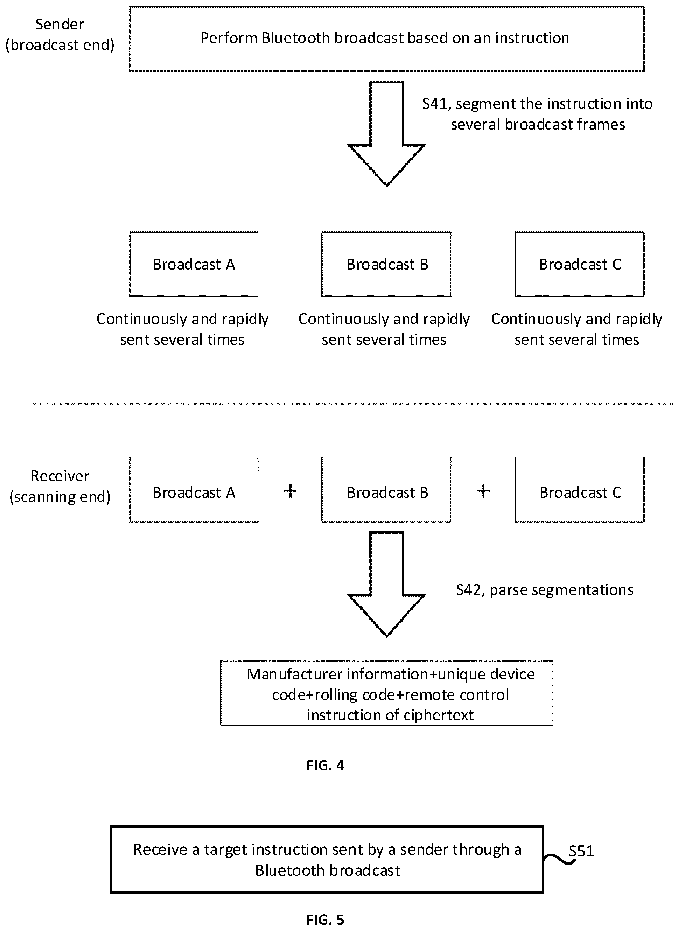

FIG. 4 is a flowchart of data processing shown according to an example of the present invention. With reference to FIG. 4, in S41, broadcast frames A, B, and C may be generated by segmenting the encrypted instruction. The broadcast frames A, B, and C may include first identifiers. As an example, the first identifier may be an identifier of the sender, such as a unique identifier (a unique device code) of the above vehicle key. In this way, after receiving the plurality of broadcast frames, the receiver may obtain the encrypted instruction by combining broadcast frames with the same first identifier.

In some implementations, the first identifier may further include a serial number of the broadcast frame among the plurality of broadcast frames. For example, the first identifier may include the above "A," "B" and "C." In this way, in S42, after determining the plurality of broadcast frames, the receiver may associate the plurality of broadcast frames based on serial numbers. For example, the broadcast frames A, B, and C are concatenated in sequence. Thus, the speed of restoring the encrypted instruction by the receiver is increased.

With the above solution, the target instruction may be encrypted with the key used when the sender established the Bluetooth connection to the receiver last time. Thus, the security of instruction transmission can be improved. In addition, through the above solution, the encrypted instruction may be segmented, and the first identifier is attached to the broadcast frame obtained through segmentation. In this way, the receiver may associate a plurality of broadcast frames according to the first identifier. Thus, the receiver can restore the encrypted instruction.

In some scenarios, the target instruction may alternatively be encrypted with other keys. For example, in a possible implementation, a plurality of keys are preset in the sender and the receiver. The step of obtaining the encrypted instruction by encrypting the target instruction includes:
obtaining a second key by determining a key from the plurality of preset keys; and
obtaining an encrypted result by encrypting the target instruction with the second key.

It should be noted that in a scenario where the plurality of keys are preset, the sender encrypts the target instruction with a selected second key. Thus, when the plurality of broadcast frames are generated, information of the second key may be attached to the broadcast frames. Illustratively, the encrypted instruction may be generated according to the encrypted result and a second identifier of the second key.

One or more broadcast frames in the encrypted instruction include the second identifier, and the second identifier is configured for the receiver to determine the second key used by the encrypted instruction from the plurality of keys. In an implementation, the second identifier may be a unique identification code of the second key. In an implementation, the second identifier may be a serial number of the second key from the plurality of keys.

In the above example of instruction transmission between the vehicle key and the vehicle, keys 1 to 5, i.e., five keys, may be pre-stored in the vehicle key and the vehicle, for example. In this way, the vehicle key may select one key from the five keys as the second key. Illustratively, the vehicle key may select a key 2 as the second key. Thus, the encrypted result is obtained by encrypting the target instruction with the key 2. In addition, a plurality of broadcast frames may be generated according to the encrypted result and an identifier of the key 2, and the encrypted instruction may be generated according to the plurality of broadcast frames. The one or more broadcast frames include the identifier of the key 2. For example, 1 to 5 broadcast frames among the 5 broadcast frames include the identifier of the key 2.

In one possible implementation, the second key may be selected in conjunction with a rolling code. Illustratively, an association relationship between the rolling code and the plurality of keys may be established. In this way, the sender may obtain a first rolling code by determining a current rolling code, and determine the second key according to the first rolling code and the association relationship between the rolling code and the plurality of keys. In this case, the second identifier may include the first rolling code.

In a possible implementation, a number of changes of the rolling code may also be recorded. When the number of the changes of the rolling code reaches a number threshold, the preset key in the sender and the receiver is updated.

With the above solution, the target instruction may be encrypted with the preset key. Thus, the security of instruction transmission can be improved. In addition, through the above solution, the encrypted result may be segmented, and the first identifier is attached to the broadcast frame obtained through segmentation. In this way, the receiver may associate a plurality of broadcast frames according to the first identifier, which helps the receiver to restore the encrypted instruction. Moreover, at least one of the plurality of broadcast frames includes an identifier of the second key. In this way, the receiver may determine the second key from the plurality of keys according to the identifier of the second key, and obtain the target instruction by decrypting the encrypted instruction with the second key.

It should be noted that the information included in the broadcast frame may be set as demanded. In a possible implementation, the one or more broadcast frames may include information of the sender, such as a brand identifier. In this way, the receiver can identify whether the broadcast frame needs to be received. With the vehicle as an example, the vehicle may compare whether the brand identifier of the vehicle key in the broadcast frame is consistent with the brand identifier of the vehicle; receive the broadcast frame in a case where the brand identifiers are consistent with each other; or discard the broadcast frame in a case where the brand identifiers are inconsistent with each other.

With reference to FIG. 2, in S22, at least one broadcast frame is sent to the receiver through the Bluetooth broadcast.

In an implementation, the broadcast frames may be selected in sequence and broadcast once.

In a possible implementation, a currently selected broadcast frame may be broadcast at least once (one or more times), and a new broadcast frame may be selected from a broadcast frame that has not been sent among the at least one broadcast frame.

With reference to FIG. 4, for the broadcast frames A, B, and C, the broadcast frame A may be selected and broadcast repeatedly (for example, continuously and repeatedly broadcast). Then, the broadcast frame B is selected and broadcast repeatedly. Finally, the broadcast frame C is selected and broadcast repeatedly.

Considering that the Bluetooth broadcast may be sent through frequency hopping on channels 37, 38 and 39, the possibility that the broadcast frames are received by the receiver can be increased through repeated broadcast. In a possible implementation, interval duration of the repeated broadcast may be less than a duration threshold. For example, an interval between two broadcast frames A is less than the duration threshold. In this way, by setting a short broadcast interval, the broadcast duration is shortened, fast broadcast is achieved, and the latency in sending instruction is reduced.

In the above solution, the sender may determine the target instruction for the receiver, and send, in a case where no Bluetooth connection to the receiver is established, the target instruction to the receiver through the Bluetooth broadcast. Thus, during the instruction transmission, the sender may send the instruction to the receiver through the Bluetooth broadcast, without establishing the Bluetooth connection to the receiver. In this way, in scenarios where Bluetooth connection fails, the instruction can also be transmitted through the above solution. Thus, a success rate of the instruction transmission can be ensured.

Moreover, in a scenario of instruction transmission between the vehicle key and the vehicle, when failing to establish the Bluetooth connection to the vehicle, the vehicle key may be connected to the vehicle through other communication methods (such as near-field communication (NFC)). In view of the above, it is necessary to configure a corresponding communication module in the vehicle key, and thus a cost of the vehicle key is increased. Through the above solution, the instruction can be transmitted to the vehicle without adding a relevant module, and thus the cost is lower.

In addition, for the method to transmit the instruction through the Bluetooth connection, it is required to establish the Bluetooth connection first. For example, the broadcast connected to the vehicle key is required to be scanned by the vehicle. It should be noted that it takes a few seconds to establish the connection (depending on a broadcast sending frequency and a duty cycle of vehicle end scanning). Through the above solution, the instruction is transmitted through the Bluetooth broadcast. Thus, the instruction can be transmitted to the vehicle before the Bluetooth connection is established, and a higher speed is achieved.

Based on the same inventive concept, a method for transmitting an instruction is provided in the embodiments of the present invention. The method may be performed, for example, by a receiver. The receiver may be the receiver involved in the above embodiment. In a scenario where the vehicle key transmits an instruction to the vehicle, the receiver may be the vehicle. FIG. 5 is a flowchart of a method for transmitting an instruction shown according to an example of the present invention. With reference to FIG. 5, the method includes S51.

S51, receiving a target instruction sent by a sender through a Bluetooth broadcast.

In a case where no Bluetooth connection to the sender is established, the sender sends the target instruction through the Bluetooth broadcast.

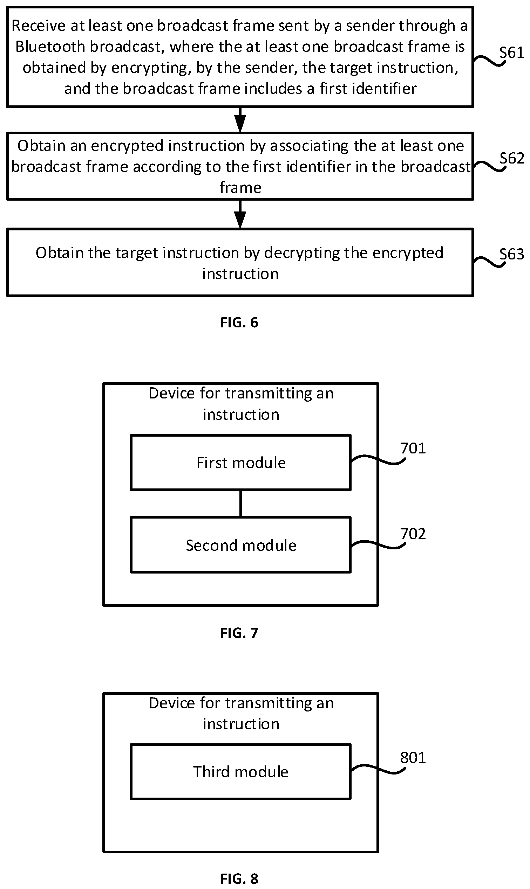

FIG. 6 is a flowchart of an implementation of S51 shown according to an example of the present invention. With reference to FIG. 6, in a possible implementation, the step of receiving the target instruction sent by the sender through the Bluetooth broadcast includes S61-S63.

S61, receiving at least one broadcast frame sent by the sender through the Bluetooth broadcast, where the at least one broadcast frame is obtained by encrypting, by the sender, the target instruction, and the broadcast frame includes a first identifier.

S62, obtaining an encrypted instruction by associating the at least one broadcast frame according to the first identifier in the broadcast frame.

S63, obtaining the target instruction by decrypting the encrypted instruction.

The implementation in which the sender sends a plurality of broadcast frames has been described in detail in the above embodiment, and is not repeated in the embodiments of the present invention for brevity of the description.

In an implementation, the encrypted instruction is obtained by encrypting with a first key, and the first key is a key determined by the sender and used when a Bluetooth connection to the receiver is established last time. The step of decrypting the encrypted instruction includes:
determining a key used when the Bluetooth connection to the sender is established last time; and
decrypting the encrypted instruction with the determined key.

With the vehicle key being the sender and the vehicle being the receiver as an example, when the Bluetooth connection is established between the vehicle key and the vehicle, a temporary key may be negotiated between the vehicle key and the vehicle, and the temporary key may be saved in the vehicle key and the vehicle. Thus, when the target instruction is sent through a broadcast, the vehicle key may obtain a first key by determining the key negotiated for use when the Bluetooth connection to the vehicle is established last time. In this way, the encrypted instruction may be obtained by encrypting the target instruction with the first key. After receiving the encrypted instruction, the vehicle may also determine the key used when the Bluetooth connection to the sender is established last time, and decrypt the encrypted instruction with the determined key.

In an implementation, a plurality of keys are preset in the sender and the receiver, and the encrypted instruction is obtained by encrypting with a second key from the plurality of keys. The plurality of broadcast frames are generated by the sender according to an encrypted result of the second key and a second identifier of the second key, and one or more broadcast frames include the second identifier. The step of obtaining the encrypted instruction by associating the at least one broadcast frame according to the first identifier in the broadcast frame includes:
obtaining the encrypted instruction and the second identifier by associating the at least one broadcast frame according to the first identifier in the broadcast frame.

The step of decrypting the encrypted instruction includes:
determining the second key used by the encrypted instruction from the plurality of preset keys according to the second identifier; and
decrypting the encrypted instruction with the second key.

As an example, the first identifier may be an identifier of the sender, such as a unique identifier (a unique device code) of the above vehicle key. In this way, after receiving the plurality of broadcast frames, the receiver may obtain the encrypted instruction by combining broadcast frames with the same first identifier.

In some implementations, the first identifier may further include a serial number of the broadcast frame among the plurality of broadcast frames. With FIG. 4 as an example, the first identifier may include "A," "B" and "C." In this way, after determining the plurality of broadcast frames, the receiver may associate the plurality of broadcast frames based on serial numbers. For example, the broadcast frames A, B, and C are concatenated in sequence. Thus, the encrypted instruction and the identifier of the second key are restored. With reference to FIG. 4, in some scenarios, the first identifier may further include manufacturer information.

In this way, the second key may be determined according to the second identifier of the second key, and the target instruction may be obtained by decrypting the encrypted instruction.

For example, in an implementation, the second identifier includes a first rolling code. The step of determining the second key used by the encrypted instruction from the plurality of preset keys according to the second identifier includes:
determining the second key according to the first rolling code and an association relationship between the rolling code and the plurality of keys.

In an implementation, the second identifier may include a serial number of the second key from the plurality of keys. In this way, the receiver may determine the second key from the plurality of keys according to the second identifier.

After the second key is obtained, the encrypted instruction may be decrypted with the second key. In an implementation, the receiver may directly decrypt the encrypted instruction with the second key. In an implementation, the receiver may verify the encrypted instruction, and decrypt the encrypted instruction in a case where an encryption quality is safe.

With the second identifier being the first rolling code as an example, the receiver may determine a rolling code used by the sender for transmitting an instruction last time as a second rolling code. In this way, the receiver may compare the first rolling code with the second rolling code, and decrypt, in a case where when the first rolling code is greater than the second rolling code, the encrypted instruction with the second key. In addition, in a case where the first rolling code is less than or equal to the second rolling code, it may be determined that receiver is likely to be subjected to a replay attack, and thus decryption of the encrypted instruction may be stopped. In this way, the verification is performed through the rolling code before decryption, which helps to improve the security of instruction transmission.

In the above solution, the sender may determine the target instruction for the receiver, and send, in a case where no Bluetooth connection to the receiver is established, the target instruction to the receiver through the Bluetooth broadcast. Thus, during the instruction transmission, the sender may send the instruction to the receiver through the Bluetooth broadcast, without establishing the Bluetooth connection to the receiver. In this way, in scenarios where Bluetooth connection fails, the instruction can also be transmitted through the above solution. Thus, a success rate of the instruction transmission can be ensured.

Based on the same inventive concept, a device for transmitting an instruction is provided in the embodiments of the present invention. FIG. 7 is a block diagram of an device for transmitting an instruction shown according to an example of the present invention. With reference to FIG. 7, the device for transmitting an instruction includes a first module 701 and a second module 702.

The first module 701 is configured to determine a target instruction for a receiver; and
the second module 702 is configured to send, in a case where no Bluetooth connection to the receiver is established, the target instruction to the receiver through a Bluetooth broadcast.

Thus, the sender may determine the target instruction for the receiver, and send, in a case where no Bluetooth connection to the receiver is established, the target instruction to the receiver through the Bluetooth broadcast. Thus, during instruction transmission, the sender may transmit the instruction to the receiver through the Bluetooth broadcast, without establishing the Bluetooth connection to the receiver. In this way, in scenarios where Bluetooth connection fails, the instruction can also be transmitted through the above solution. Thus, a success rate of the instruction transmission can be ensured.

Optionally, the second module 702 includes:
a first sub-module, configured to obtain an encrypted instruction by encrypting the target instruction, where the encrypted instruction includes at least one broadcast frame, the broadcast frame includes a first identifier, and the first identifier is configured for the receiver to obtain the encrypted instruction by associating the at least one broadcast frame; and
a second sub-module, configured to send the at least one broadcast frame to the receiver through the Bluetooth broadcast.

Optionally, the first sub-module includes:
a first sub-unit configured to obtain a first key by determining a key used when a Bluetooth connection to the receiver is established last time; and
a second sub-unit configured to obtain the encrypted instruction by encrypting the target instruction with the first key.

Optionally, the first sub-module includes:
a third sub-unit, configured to obtain a second key by determining a key from a plurality of preset keys; and
a fourth sub-unit, configured to obtain an encrypted result by encrypting the target instruction with the second key.
a fifth sub-unit configured to generate the encrypted instruction according to the encrypted result and a second identifier of the second key, where one or more broadcast frames in the encrypted instruction include the second identifier, and the second identifier is configured for the receiver to determine the second key used by the encrypted instruction from the plurality of keys.

Optionally, the third sub-unit is configured to:
obtain a first rolling code by determining a current rolling code; and
determine the second key according to the first rolling code and an association relationship between the rolling code and the plurality of keys;
where the second identifier includes the first rolling code.

Optionally, the second sub-module further includes:
a sixth sub-unit, configured to broadcast a currently selected broadcast frame at least once; and
a seventh sub-unit, configured to select a new broadcast frame from a broadcast frame that has not been sent among the at least one broadcast frame.

Optionally, the second module 702 includes:
a fourth sub-module, configured to send, in a case where the Bluetooth connection to the receiver fails, the target instruction to the receiver through the Bluetooth broadcast; or
a fifth sub-module, configured to stop establishing, in a case where a number of Bluetooth devices connected to the receiver reaches a number threshold, the Bluetooth connection to the receiver, and send the target instruction to the receiver through the Bluetooth broadcast; or
a sixth sub-module, configured to stop establishing, in a case where the Bluetooth connection to the receiver fails and the number of the Bluetooth devices connected to the receiver reaches the number threshold, the Bluetooth connection to the receiver, and send the target instruction to the receiver through the Bluetooth broadcast.

Based on the same inventive concept, a device for transmitting an instruction is provided in the embodiments of the present invention. FIG. 8 is a block diagram of a device for transmitting an instruction shown according to an example of the present invention. With reference to FIG. 8, the device for transmitting an instruction includes a third module 801.

The third module 801 is configured to receive a target instruction sent by a sender through a Bluetooth broadcast;
where in a case where no Bluetooth connection to the sender is established, the sender sends the target instruction through the Bluetooth broadcast.

With the above device, the sender may determine the target instruction for the receiver, and send, in a case where no Bluetooth connection to the receiver is established, the target instruction to the receiver through the Bluetooth broadcast. Thus, during instruction transmission, the sender may transmit the instruction to the receiver through the Bluetooth broadcast, without establishing the Bluetooth connection to the receiver. In this way, in scenarios where Bluetooth connection fails, the instruction can also be transmitted through the above solution. Thus, a success rate of the instruction transmission can be ensured.

Optionally, the third module 801 includes:
a seventh sub-module, configured to receive at least one broadcast frame sent by the sender through the Bluetooth broadcast, where the at least one broadcast frame is obtained by encrypting, by the sender, the target instruction, and the broadcast frame includes a first identifier;
an eighth sub-module, configured to obtain an encrypted instruction by associating the at least one broadcast frame according to the first identifier in the broadcast frame; and
a ninth sub-module, configured to obtain the target instruction by decrypting the encrypted instruction.

Optionally, the encrypted instruction is obtained by encrypting with a first key, and the first key is a key determined by the sender and used when a Bluetooth connection to the receiver is established last time; and the ninth sub-module includes:
a first processing unit configured to determine a key used when a Bluetooth connection to the sender is established last time; and
a second processing unit configured to decrypt the encrypted instruction with the determined key.

Optionally, a plurality of keys are preset in the sender, and the encrypted instruction is obtained by encrypting with a second key from the plurality of keys; where a plurality of broadcast frames are generated by the sender according to an encrypted result of the second key and a second identifier of the second key, and one or more broadcast frames include the second identifier; where the eighth sub-module includes:
a third processing unit, configured to obtain the encrypted instruction and the second identifier by associating the at least one broadcast frame according to the first identifier in the broadcast frame; and
where the ninth sub-module includes:
   a fourth processing unit, configured to determine the second key used by the encrypted instruction from the plurality of preset keys according to the second identifier; and
   a fifth processing unit configured to decrypt the encrypted instruction with the second key.

Optionally, the second identifier includes a first rolling code; and the fourth processing unit is configured to:
determine the second key according to the first rolling code and an association relationship between the rolling code and the plurality of keys; and
where the fifth processing unit is configured to:
   obtain a second rolling code by determining a rolling code used by the sender for transmitting an instruction last time; and
   decrypt, in a case where the first rolling code is greater than the second rolling code, the encrypted instruction with the second key.

A device for transmitting an instruction is provided in the embodiments of the present invention. The device for transmitting an instruction includes:
a processor; and
a memory configured to store processor-executable instructions;
where the processor is configured to execute steps of the method for transmitting the instruction according to any embodiment of the present invention.

A computer-readable storage medium is provided in the embodiments of the present invention. The computer-readable storage medium stores a computer program, where the computer program, when executed by a processor, implements steps of the method for transmitting an instruction according to any embodiment of the present invention.

A computer program product is provided according to the embodiments of the present invention. The computer program product includes a computer program, where the computer program, when executed by a processor, implements the method for transmitting an instruction according to any embodiment of the present invention.

A specific way of each module of the device for transmitting an instruction in the above embodiment to execute an operation has been described in detail in the embodiments of the relevant method for transmitting the instruction, and is not repeated here.

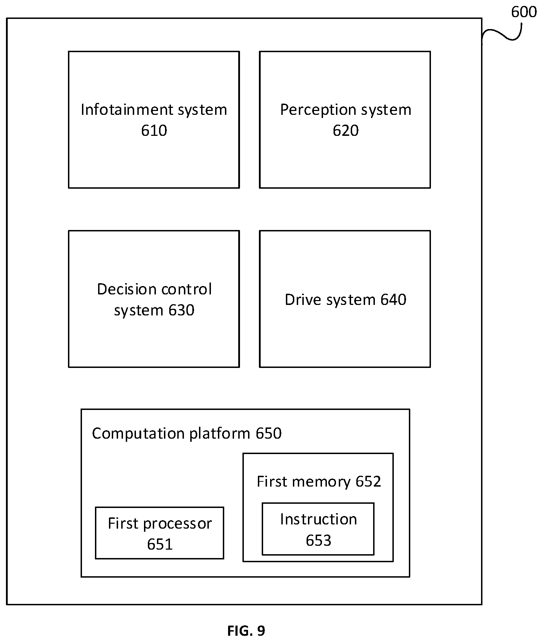

FIG. 9 is a block diagram of a vehicle 600 shown according to an example. For example, the vehicle 600 may be a hybrid vehicle, a non-hybrid vehicle, an electric vehicle, a fuel cell vehicle, etc. The vehicle 600 may be an autonomous vehicle, a semi-autonomous vehicle, or a non-autonomous vehicle.

With reference to FIG. 9, the vehicle 600 may include various sub-systems, such as an infotainment system 610, a perception system 620, a decision control system 630, a drive system 640, and a computation platform 650. The vehicle 600 may further include more or fewer sub-systems, and each sub-system may include a plurality of components. Also, interconnection between the sub-systems and between the components of the vehicle 600 may be achieved in a wired or wireless manner.

In some embodiments, the infotainment system 610 may include a communication system, an entertainment system, a navigation systems, etc.

The perception system 620 may include several sensors configured to perceive information of an environment surrounding the vehicle 600. For example, the perception system 620 may include a global positioning system (such as a global positioning system (GPS), a Beidou navigation satellite system or any other positioning system), an inertial measurement unit (IMU), a laser radar, a millimeter wave radar, an ultrasonic radar, and a photographing device.

The decision control system 630 may include a computation system, a vehicle controller, a steering system, a throttle, and a braking system.

The drive system 640 may include components that provide powered motion for the vehicle 600. In an embodiment, the drive system 640 may include an engine, an energy source, a transmission system, and wheels. The engine may be one or a combination of an internal combustion engine, an electric motor, and an air compression engine. The engine may convert energy provided by the energy source into mechanical energy.

Some or all functions of the vehicle 600 are controlled by the computation platform 650. The computation platform 650 may include at least one first processor 651 and a first memory 652, where the first processor 651 may execute an instruction 653 stored in the first memory 652.

The first processor 651 may be any conventional processor, such as a commercially-available central processing unit (CPU). The processor may further include, for example, a graphic process unit (GPU), a field programmable gate array (FPGA), a system on chip (SoC), an application specific integrated circuit (ASIC), or their combinations.

The first memory 652 may be implemented through any type of volatile or non-volatile storage devices or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

In addition to the instruction 653, the first memory 652 may further store data, such as road maps, route information, and a location, direction, speed, etc. of the vehicle. The data stored in the first memory 652 may be used by the computation platform 650.

In the embodiments of the present invention, the first processor 651 may complete all or some steps of the above method for transmitting an instruction by executing the instruction 653.

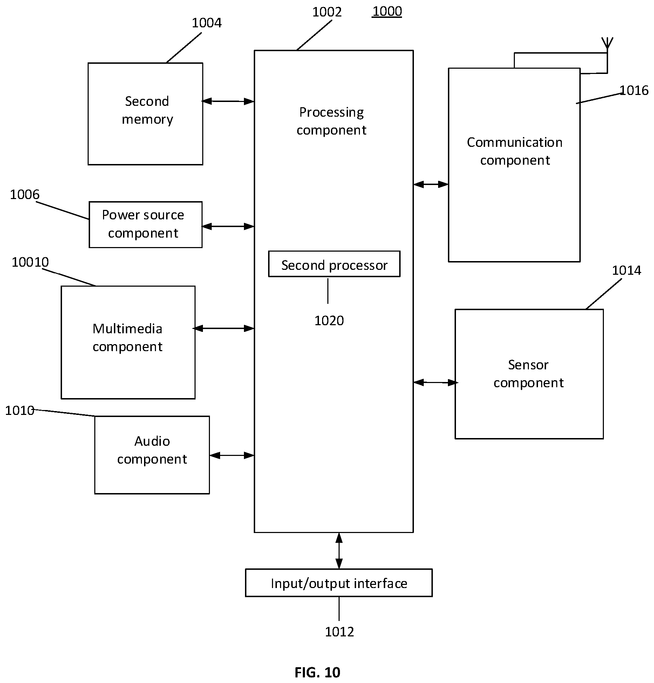

FIG. 10 is a block diagram of a device 1000 for transmitting an instruction shown according to an example. The device 1000 may be a mobile phone, a tablet device, a wearable device, etc.

With reference to FIG. 10, the device 1000 may include one or more of the following components: a processing component 1002, a second memory 1004, a power source component 1006, a multimedia component 10010, an audio component 1010, an input/output interface 1012, a sensor component 1014, and a communication component 1016.

Generally, the processing component 1002 controls an overall operation of the device 1000, such as operations associated with display, telephone calls, data communication, camera operations, and recording operations. The processing component 1002 may include one or more second processors 1020 to execute an instruction, so as to complete all or some of the steps in the above method for transmitting an instruction. In addition, the processing component 1002 may include one or more modules, so as to facilitate interactions between the processing component 1002 and other components. For example, the processing component 1002 may include a multimedia module, so as to facilitate the interaction between the multimedia component 10010 and the processing component 1002.

The second memory 1004 is configured to store various types of data to support the operations on the device 1000. Instances of such data include an instruction operated on the device 1000 for any application or method, contact data, phonebook data, messages, pictures, video, etc. The second memory 1004 may be implemented through any type of volatile or non-volatile storage devices or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

The power source component 1006 provides power for various components of the device 1000. The power source component 1006 may include a power source management system, one or more power sources, and other components associated with power generation, management, and distribution for the device 1000.

The multimedia component 10010 includes a screen that provides one output interface between the device 1000 and a user. In some embodiments, the screen may include a liquid crystal display (LCD) and a touch panel (TP). If including the touch panel, the screen may be implemented as a touch screen, so as to receive an input signal from the user. The touch panel includes one or more touch sensors, so as to sense touches, swipes, and gestures on the touch panel. The touch sensor may sense a boundary of a touch or swipe action, and measure duration and pressure associated with the touch or swipe operation. In some embodiments, the multimedia component 10010 includes one front-facing camera and/or one rear-facing camera. When the device 1000 is in an operation mode, such as a photographing mode or a video mode, the front-facing camera and/or the rear-facing camera may receive external multimedia data. Each of the front-facing camera and the rear-facing camera may be one fixed optical lens system or have a focal length and an optical zoom capability.

The audio component 1010 is configured to output and/or input audio signals. For example, the audio component 1010 includes one microphone (MIC) configured to receive external audio signals when the device 1000 is in the operation mode, for example, a calling mode, a recording mode, and a speech recognition mode. The audio signals received may be further stored in the second memory 1004 or sent via the communication component 1016. In some embodiments, the audio component 1010 further includes one speaker configured to output audio signals.

The input/output interface 1012 provides an interface between the processing component 1002 and a peripheral interface module. The above peripheral interface module may be a keyboard, a click wheel, a button, etc. These buttons may include, but are not limited to, a home button, a volume button, a start button, and a lock button.

The sensor component 1014 includes one or more sensors configured to provide state assessments for various aspects of the device 1000. For example, the sensor component 1014 may detect an on/off state of the device 1000 and relative locating of the components. For example, the components are the display and the keypad of the device 1000. The sensor component 1014 may also detect a change in position of the device 1000 or one component of the device 1000, the presence or absence of contact between the user and the device 1000, an orientation or acceleration/deceleration of the device 1000, and a change in temperature of the device 1000. The sensor component 1014 may include a proximity sensor configured to detect the presence of nearby objects in the absence of any physical contact. The sensor component 1014 may further include a light sensor, such as a complementary metal-oxide-semiconductor transistor (CMOS) or charge coupled device (CCD) image sensor configured to be used in imaging application. In some embodiments, the sensor component 1014 may further include an acceleration sensor, a gyroscope sensor, a magnetic sensor, a pressure sensor, or a temperature sensor.

The communication component 1016 is configured to facilitate wired or wireless communication between the device 1000 and other devices. The device 1000 may access a wireless network based on a communication standard, such as the wireless fidelity (WiFi), the 4th generation of mobile communication technology (4G) or the 5th generation of mobile communication technology (5G), or their combinations. In one example, the communication component 1016 receives a broadcast signal or broadcast relevant information from an external broadcast management system via a broadcast channel. In one example, the communication component 1016 further includes a near-field communication (NFC) module, so as to facilitate short-range communication. For example, the NFC module may be implemented based on a radio frequency identification (RFID) technology, an infrared data association (IrDA) technology, an ultra-wideband (UWB) technology, a Bluetooth (BT) technology, etc.

In an example, the device 1000 may be configured to execute the above method for transmitting an instruction by being implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, etc.

A non-transitory computer-readable storage medium including an instruction, for example, a second memory 1004 including an instruction is further provided in an example. The above method for transmitting an instruction may be completed by executing the above instruction by a second processor 1020 of the device 1000. For example, the non-transitory computer-readable storage medium may be an ROM, a random access memory (RAM), a compact disk read-only memory (CD-ROM), a magnetic tape, a floppy disk, an optical data storage device, etc.

As used herein, the term processor may refer to one processor that performs the defined functions or a plurality of processors that collectively perform defined functions, so that the execution of the individual defined functions may be divided amongst such processors.

In addition, the word "illustrative" is used here to mean serving as an example, instance, and illustration. Any aspect or design described here as "illustrative" is not necessarily to be interpreted as being advantageous over other aspects or designs. On the contrary, the word "illustrative" is used to present concepts in a specific manner. As used here, the term "or" is intended to indicate the inclusive "or" rather than the exclusive "or." To be specific, "X applies A or B" is intended to indicate any natural inclusive permutations, unless specified or clear from the context otherwise. To be specific, if X applies A, X applies B, or X applies A and B, "X applies A or B" satisfies any one of the foregoing examples. Also, the articles "a" and "an" as used in the present invention and the appended claims are generally interpreted as indicating "one or more," unless specified or clear from the context to be directed to the singular form otherwise.

Although the present invention has been shown and described with respect to one or more implementations, those skilled in the art can conceive of equivalent variations and modifications after reading and understanding the description and the accompanying drawings. The present invention includes all such modifications and variations, and is limited merely by the scope of the claims. In particular regard to various functions performed by the above components (for example, modules), the terms used to describe such components are intended to correspond to any components (functionally equivalent) that performs the specified functions of the components described, unless indicated otherwise, even though not structurally equivalent to the structures disclosed. Also, although a particular feature of the present invention has been disclosed with respect to only one of several implementations, such the feature can be combined with one or more other features of other implementations as can be desired and advantageous for any given or particular application. In addition, for the terms "comprise," "include," "provided with," "have" or their variants used in the particular implementations or the claims, such terms are intended to be inclusive in a manner similar to that of the term "encompass."

The scope of the present invention is limited merely by the appended claims.

Also, various features in some embodiments of the present invention described here can be combined with one another, unless indicated otherwise. As used here, the term "and/or" includes any one and any combinations of any two or more of the relevant items listed. Similarly, the phrase "at least one of..." includes any one and any combinations of any two or more of the relevant items listed.

Although the terms such as "first," "second," and "third" can be used here to describe various modules, the modules are not limited by these terms. On the contrary, these terms are merely used to distinguish one module from another module. Thus, a first module mentioned in the examples described here can also be referred to as a second module, without departing from the teachings in each example. Also, the terms "first" and "second" are merely used for the purpose of description, and cannot be interpreted as indicating or implying relative importance or implicitly indicating a quantity of indicated technical features. Thus, features defined with "first" and "second" can explicitly or implicitly include at least one of such a feature. In the description of the present invention, the term "a plurality of" indicates at least two, such as two and three, unless definitely and specifically defined otherwise.

## Claims

1. A method for transmitting an instruction, comprising:
determining (S11) a target instruction for a receiver; and
sending (S12), in a case where no Bluetooth connection to the receiver is established, the target instruction to the receiver through a Bluetooth broadcast.

2. The method according to claim 1, wherein sending (S12) the target instruction to the receiver through the Bluetooth broadcast comprises:
obtaining (S21) an encrypted instruction by encrypting the target instruction, wherein the encrypted instruction comprises at least one broadcast frame, wherein the broadcast frame comprises a first identifier, and the first identifier is configured for the receiver to obtain the encrypted instruction by associating the at least one broadcast frame; and
sending (S22) the at least one broadcast frame to the receiver through the Bluetooth broadcast.

3. The method according to claim 2, wherein obtaining (S21) the encrypted instruction by encrypting the target instruction comprises:
obtaining a first key by determining a key used when a Bluetooth connection to the receiver is established last time; and
obtaining the encrypted instruction by encrypting the target instruction with the first key.

4. The method according to claim 2 or 3, wherein obtaining (S21) the encrypted instruction by encrypting the target instruction comprises:
obtaining a second key by determining a key from a plurality of preset keys;
obtaining an encrypted result by encrypting the target instruction with the second key; and
generating the encrypted instruction according to the encrypted result and a second identifier of the second key, wherein one or more broadcast frames in the encrypted instruction comprise the second identifier, and the second identifier is configured for the receiver to determine the second key used by the encrypted instruction from the plurality of keys;
optionally, wherein obtaining the second key by determining the key from the plurality of preset keys comprises:
obtaining a first rolling code by determining a current rolling code; and
determining the second key according to the first rolling code and an association relationship between a rolling code and the plurality of keys;
wherein the second identifier comprises the first rolling code.

5. The method according to any one of claims 2 to 4, wherein sending (S22) the at least one broadcast frame to the receiver through the Bluetooth broadcast comprises:
broadcasting a currently selected broadcast frame at least once; and
selecting a new broadcast frame from a broadcast frame that has not been sent among the at least one broadcast frame.

6. The method according to any one of claims 1 to 5, wherein sending (S12), in the case where no Bluetooth connection to the receiver is established, the target instruction to the receiver through the Bluetooth broadcast comprises:
sending, in a case where the Bluetooth connection to the receiver fails, the target instruction to the receiver through the Bluetooth broadcast; or
stopping establishing, in a case where a number of Bluetooth devices connected to the receiver reaches a number threshold, the Bluetooth connection to the receiver, and sending the target instruction to the receiver through the Bluetooth broadcast; or
stopping establishing, in a case where the Bluetooth connection to the receiver fails and the number of the Bluetooth devices connected to the receiver reaches the number threshold, the Bluetooth connection to the receiver, and sending the target instruction to the receiver through the Bluetooth broadcast.

7. A method for transmitting an instruction, comprising:
receiving (S51) a target instruction sent by a sender through a Bluetooth broadcast;
wherein the sender sends the target instruction through the Bluetooth broadcast, in a case where no Bluetooth connection to the sender is established.

8. The method according to claim 7, wherein receiving (S51) the target instruction sent by the sender through the Bluetooth broadcast comprises:
receiving (S61) at least one broadcast frame sent by the sender through the Bluetooth broadcast, wherein the at least one broadcast frame is obtained by encrypting, by the sender, the target instruction, and the broadcast frame comprises a first identifier;
obtaining (S62) an encrypted instruction by associating the at least one broadcast frame according to the first identifier in the broadcast frame; and
obtaining (S63) the target instruction by decrypting the encrypted instruction.

9. The method according to claim 8, wherein the encrypted instruction is obtained by encrypting with a first key, and the first key is a key determined by the sender and used when a Bluetooth connection to the receiver is established last time; and decrypting (S63) the encrypted instruction comprises:
determining a key used when the Bluetooth connection to the sender is established last time; and
decrypting the encrypted instruction with the determined key.

10. The method according to claim 8 or 9, wherein a plurality of keys are preset in the sender, and the encrypted instruction is obtained by encrypting with a second key from the plurality of keys; wherein the at least one broadcast frame is generated by the sender according to an encrypted result of the second key and a second identifier of the second key, and one or more broadcast frames comprise the second identifier;
wherein obtaining (S62) the encrypted instruction by associating the at least one broadcast frame according to the first identifier in the broadcast frame comprises:
obtaining the encrypted instruction and the second identifier by associating the at least one broadcast frame according to the first identifier in the broadcast frame; and
wherein decrypting the encrypted instruction comprises:
determining the second key used by the encrypted instruction from the plurality of preset keys according to the second identifier; and
decrypting the encrypted instruction with the second key.

11. The method according to claim 10, wherein the second identifier comprises a first rolling code; wherein determining the second key used by the encrypted instruction from the plurality of preset keys according to the second identifier comprises:
determining the second key according to the first rolling code and an association relationship between a rolling code and the plurality of keys; and
wherein decrypting the encrypted instruction with the second key comprises:
obtaining a second rolling code by determining a rolling code used by the sender for sending an instruction last time; and
decrypting, in a case where the first rolling code is greater than the second rolling code, the encrypted instruction with the second key.

12. A device for transmitting an instruction, comprising:
a first module (701), configured to determine a target instruction for a receiver; and
a second module (702), configured to send, in a case where no Bluetooth connection to the receiver is established, the target instruction to the receiver through a Bluetooth broadcast.

13. A device for transmitting an instruction, comprising:
a third module (801), configured to receive a target instruction sent by a sender through a Bluetooth broadcast;
wherein the sender sends the target instruction through the Bluetooth broadcast, in a case where no Bluetooth connection to the sender is established.

14. A non-transitory computer-readable storage medium storing a computer program, wherein the computer program, when executed by a processor, implements the steps of the method according to any one of claims 1 to 11.

15. A computer program product comprising a computer program, wherein the computer program, when executed by a processor, implements the steps of the method according to any one of claims 1 to 11.
